Europäisches Patentamt

European Patent Office

Office européen des brevets

(11) Publication number: **0 167 367**
**B1**

(12) EUROPEAN PATENT SPECIFICATION

(45) Date of publication of patent specification: **07.11.90**

(21) Application number: **85304639.9**

(22) Date of filing: **28.06.85**

(51) Int. Cl.⁵: **A 63 B 21/08,** A 63 B 23/00,
A 63 B 17/00

(54) **Wall mounted exercise unit.**

(30) Priority: **29.06.84 US 626394**

(43) Date of publication of application:
**08.01.86 Bulletin 86/02**

(45) Publication of the grant of the patent:
**07.11.90 Bulletin 90/45**

(84) Designated Contracting States:
**DE FR GB SE**

(56) References cited:
**DE-A-2 753 715**
**DE-A-3 205 581**
**FR-A-2 561 528**
**US-A-3 207 512**
**US-A-3 268 224**
**US-A-3 342 485**
**US-A-4 098 502**
**US-A-4 369 966**

(73) Proprietor: **DIVERSIFIED PRODUCTS CORPORATION**
**309 Williamson Avenue**
**Opelika, AL 36801 (US)**

(72) Inventor: **Rockwell, Gary L.**
**205 Willowcrest Way**
**LaGrange, GA 30240 (US)**

(74) Representative: **Frost, Dennis Thomas et al**
**WITHERS & ROGERS 4 Dyer's Buildings Holborn**
**London, EC1N 2JT (GB)**

Courier Press, Leamington Spa, England.

## Description

The present invention relates to exercise benches and, more particularly, to an exercise bench for a weight lifting exercise unit.

The importance of regular exercise for building and maintaining strength and endurance cannot be overemphasized. The modern conveniences which we enjoy and the sedentary tasks which we increasingly perform have given us a comfortable lifestyle at the expense of physical fitness. Highly active exercise programs, such as running, develop endurance of the cardiovascular system. Muscular strength and endurance is best developed through weight training.

The simplest and least expensive apparatus for weight training is the barbell with removable weights. However, the use of the barbell alone cannot develop all areas of the body. Hence, additional apparatus must be employed for a comprehensive conditioning program. Devices developed for this purpose generally provide the user with a force register against which muscular effort must be applied. Resistance is typically provided by a weight and pulley arrangement, or by an elastic element. These devices permit the force to be applied to the user's body from many different directions in order to develop substantially all areas of the body.

Few of these weight training devices, however, can provide the user with substantially all of the exercising variants required to develop the entire body. Those that do are generally large, complex and costly machines which occupy a substantial amount of space, and consequently are not suitable for home or personal use. These are usually found only in health clubs and other athletic establishments. Devices specifically designed for home use, while somewhat smaller, have not always provided the necessary and desired wide variety of exercise options. Hence, a need exists for a compact and versatile exercise unit provided with an adjustable floor supported exercise bench which is compact and readily adjustable to an incline or slant position.

In this connection, it has already been proposed in US—A—4369966, US—A—3342485 and US—A—4098502 to provide exercise units each having a bench, the seat frame of which has foldable front legs and is pivoted at its rear end for movement between a substantially horizontal position in which its front end is supported by said legs and a downwardly inclined position in which the front legs are folded beneath the frame. The latter supports front and rear seat members connected together or to the frame at their adjacent ends for movement relative to one another and to the frame between a first position in which they extend parallel to the frame and a second position in which at least one of said seat members is inclined upwardly away from the frame. By contrast, DE—A—2753715 discloses a bench in which the seat frame is not movable as a whole between horizontal and inclined positions, but is formed in a plurality of pivotally connected sections with the pivotal junctions between adjacent sections supported by legs of adjustable length to enable the individual sections to be inclined at different angles to the horizontal.

A principal object of the invention is to provide a pivotable and adjustable bench assembly which provides for a wide variety of exercising positions.

To this end, according to the invention, there is provided an adjustable floor-supported exercise bench having an elongated bench frame supporting a seat and pivotally connected at its rear end to the rear support means for movement relative thereto between a first substantially horizontal position in which its front end is supported above the floor by front support means comprising a front leg assembly and a second inclined position in which its front end rests on the floor, said bench comprising front and rear longitudinally aligned subframes pivotally connected together at their adjacent ends for relative movement between a first position in which they are coplanar and a second position in which the rear subframe is inclined upwardly at an obtuse angle with respect to the front subframe, characterised in that in said second position the front subframe and the front end of the rear subframe are adjacent to the floor; the front leg assembly is coupled to a single, tubular, longitudinal undercarriage member on the rear subframe when the bench frame is in its first position, to support the front subframe above the floor, and removed from the undercarriage member in the second position of the bench frame to permit the front subframe to rest on the floor; and removable locking means is provided for preventing relative pivotal movement of the front and rear subframes in the first co-planar position of said subframes.

The rear support means is preferably mounted on an upstanding exercise unit having at least one liftable weight, upright guide means for guiding the weight during lifting and lifting means engagable by a user and operatively connected to the weight for raising and lowering the weight; an exercise unit of this type preferably has a carriage/pulley arrangement; and an arm curl exercise device.

The combined exercising apparatus of the present invention comprises an adjustable, floor-supported exercise bench fixed to the base of the exercise unit. The bench has an elongated frame, which supports a seat. Pivotable support means are provided adjacent the rear end of the bench for supporting the rear end of the bench frame above the floor. The pivotal connection to the rear support means also permits the bench to be readily pivoted between storage and operative positions. The front support means supports the front end of the bench frame at a variable height above or adjacent the floor, and may also accommodate a variety of exercise accessories.

The front and rear longitudinally arranged and pivotably interconnected subframes enable the bench frame to pivot at an intermediate position so that the front subframe is at an angle with respect to the rear subframe. Front and rear cushions may be respectively attached to the front and rear subframes.

The locking means prevents relative pivotal movement of the two subframes when the subframes are aligned in a mutually straight position. When the locking means is released, the subframes are free to pivot relative to one another so that the first subframe will be inclined with respect to the second subframe.

The invention will be understood more fully and clearly from the following detailed description with reference to the accompanying drawings, in which:

Fig. 1 is a perspective view of the exercise unit;

Fig. 2 is a side elevational view of the exercise unit;

Fig. 3 is an exploded, perspective view of the base and lower portion of the guide means of the exercise unit;

Fig. 4 is an exploded, perspective view of the top support and upper portion of the guide means;

Fig. 5 is an exploded, perspective view of the carriage assembly of the exercise unit;

Fig. 6 is an exploded, perspective view of the bench assembly and rear support means of the invention, shown in an inverted position;

Fig. 7 is an exploded, perspective view of a portion of the bench assembly and support means of the present invention, shown in an inverted position;

Fig. 8 is an exploded, perspective view of an auxiliary leg lift cushion and pivot assembly for the unit;

Fig. 9 is an exploded, perspective view of an auxiliary leg lift and leg curl assembly for the unit;

Fig. 10 is a partial perspective and exploded view of the base portion, weights, bench assembly and rear support of the exercise unit of the present invention;

Fig. 11 is an exploded, perspective view of an auxiliary exercise assembly for the unit;

Fig. 12 is a perspective view of the handlebar of the present invention with a leg press bar fixed thereto;

Fig. 13 is a perspective view of the lower portion of the exercise unit of the present invention with the bench in its slant board position;

Fig. 14 is a perspective view of the exercise unit of the invention shown in its stored position; and

Figs. 15—19 are schematic, side elevational views of the exercise unit configured for some of the many exercises for which the unit may be used.

## Detailed description of the preferred embodiments

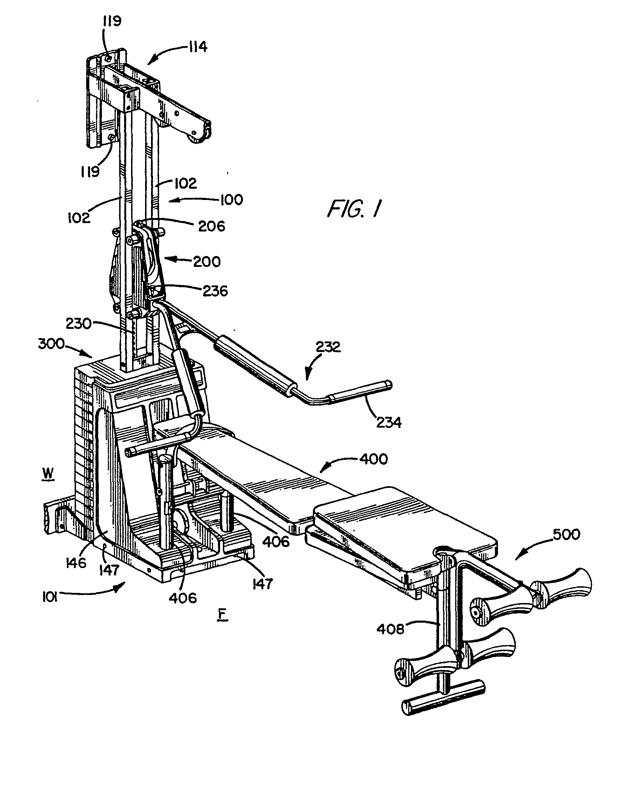

Referring primarily to Figure 1, the exercise unit of the invention generally comprises an upright guide bar frame 100 for guiding weights 300 lifted by a carriage and handle assembly 200, which is also guided along guide bar frame 100. Guide bar frame 100 is supported on a base 101, which rests on a floor F. Both guide bar frame 100 and base 101 are secured to a wall W or other vertical supporting surface at the top and bottom portions of the unit, as described in detail below. A bench assembly 400 may be attached to the exercise unit.

Guide bar frame 100 comprises two parallel guide bars 102 of generally square cross section fabricated in upper and lower guide bar portions 104 and 106, respectively. Fabrication of guide bars 102 in these shorter sections permit the unit to be packaged and shipped in one or more cartons of manageable size. Upper and lower guide bar sections 104 and 106 are joined together by a U-shaped spacer bracket 108 which spans the joints between the sections and is fastened to each of the sections by appropriate fastening means, such as bolts and nuts. These joints are reinforced by tubular inserts 107 which are received within guide bar sections 104 and 106 and are simultaneously fastened in place by the same appropriate fastening means.

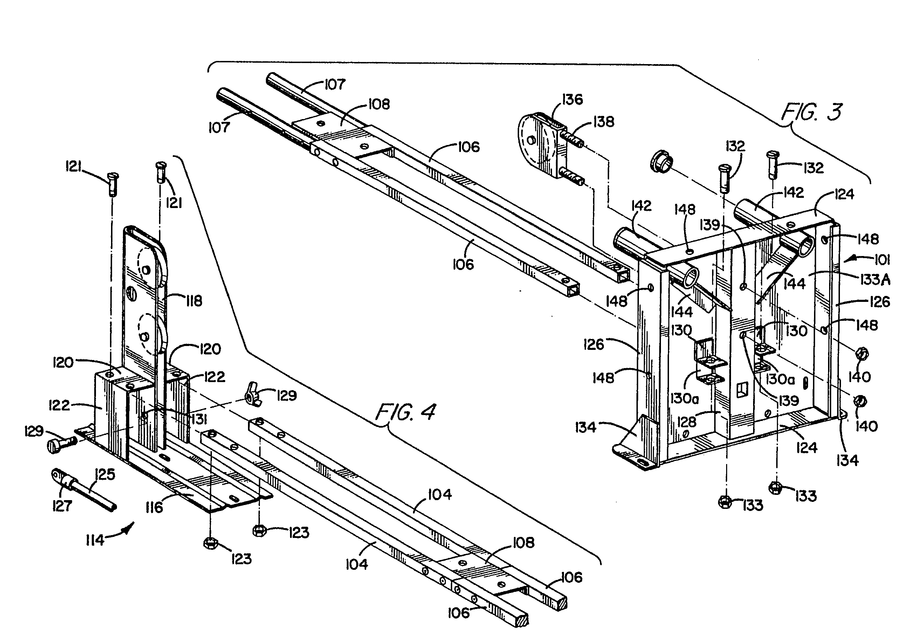

The upper ends of guide bars 102 are secured to a top bracket 114 (Fig. 4). Bracket 114 has a back plate 116 and an integrally formed pulley assembly 118. Back plate 116 includes apertures through which appropriate fastening means, such as upper and lower hanger bolts 119, extend to secure the top of the unit to a wall (Fig. 1). Pulley assembly 118 projects forwardly from back plate 116 in a direction essentially perpendicular to the plane of back plate 116. Bracket 114 further includes a pair of apertured, transversely spaced flanges 120 to which guide bars 102 are bolted by bolts 121 and nuts 123. Flanges 120 are integrally connected to pulley assembly 118, as shown in Figure 4. Bracket 114 also has flat portions 122 extending rearwardly from flanges 120. A cable 125 may be fixed to pulley assembly 118 to perform selected exercises. Apertured end 127 of cable 125 is fixed to pulley assembly 118 by a bolt and nut 129 extending through apertured end 127 and cable mounting hole 131 of assembly 118.

The bottom ends of guide bars 102 are fastened to base 101 (Fig. 3). Base 101 is formed from a flat base plate 133A having depending parallel flanges 124 and depending parallel flanges 126. A center support beam 128 is welded or otherwise integrally fixed to flanges 124 and base plate 133A midway between, and parallel to, flanges 126. A pair of apertured mounting flanges 130 are secured to base plate 133A. The lower portion of guide bar portions 106 protrude through apertures 130a in base plate 133A and are bolted to mounting flanges 130 by appropriate fastening means, such as screws 132 and locknuts 133. Wall mounting brackets 134 are fixed to the outside of flanges 126 to enable base 101 to be fastened to a wall surface, as shown in Figure 1.

A lower pulley bracket assembly 136 is fixed to support beam 128. Lower pulley bracket assembly 136 includes projecting threaded studs 138 which fit into holes in base plate 133 (not shown) and aligned holes 139 in support beam 128. Locknuts 140 are threaded onto studs 138 to secure lower pulley bracket assembly 136 to support beam 128. A pair of upwardly projecting guide posts 142 are secured to base plate 133 by L-brackets 144. L-brackets 144 are welded to guide posts 142, support beam 128 and base plate 133. As will be explained in detail below, the legs of a bench assembly may be placed over guide tubes 142 to secure a bench assembly to base 101 of the exercise unit.

A cover assembly 146 (Fig. 1) may be attached to flanges 124 and 126 by screws 147 or other appropriate fastening devices extending through apertures 148 in the flanges. Cover 146 may, for example, be a molded plastic cover.

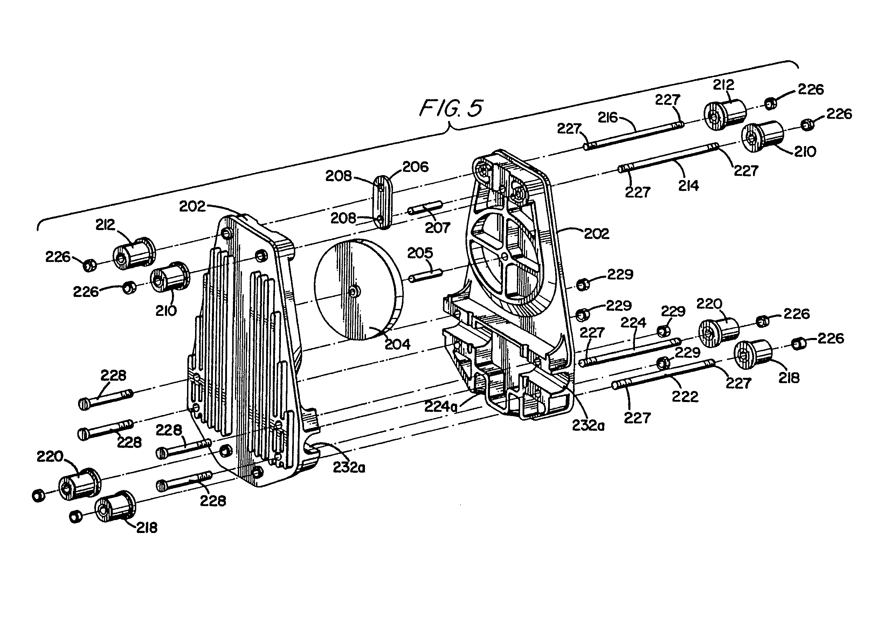

Carriage assembly 200 (Fig. 5) comprises a pair of facing end plates 202. A pulley wheel 204 is rotatably supported between end plates 202 on an axle 205. An apertured bracket 206 is fixed between end plates 202 by a pin 207 extending through one of apertures 208 on bracket 206.

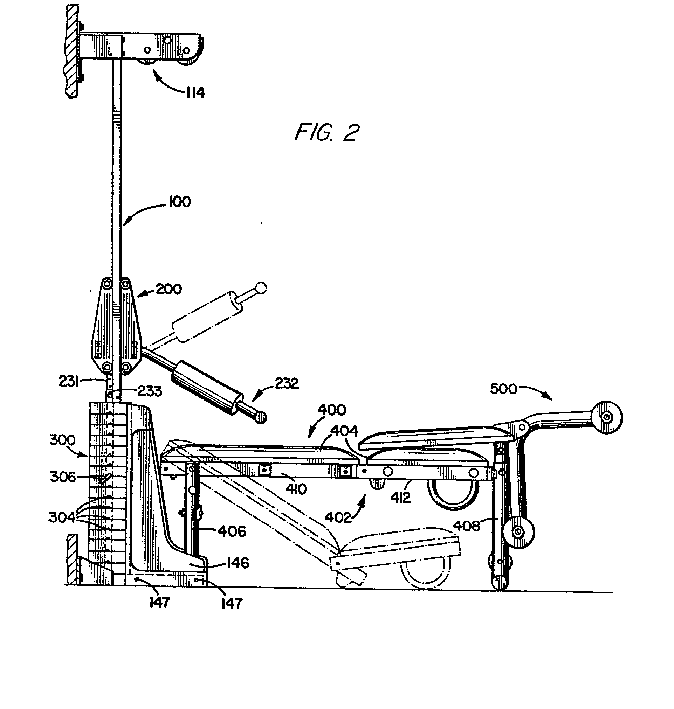

As shown in Figure 5, two pairs of shouldered upper rollers 210, 212 are each rotatably journaled on the outside of the upper portion of carriage assembly 200 on axles 214, 216, respectively, which extend through end plates 202. Similarly, two pairs of shouldered lower rollers 218, 220 are each rotatably journaled on the outside of the lower portion of carriage assembly 200 on axles 222, 224, respectively, which extend through the end plates. Locknuts 226 secure rollers 210, 212, 218 and 220 onto threaded portions 227 of axles 214, 216, 222 and 224. End plates 202 are secured together by bolts 228 and locknuts 229, or other appropriate fastening means. As shown in Figures 1 and 2, the upper and lower pairs of rollers each engage the front and rear surfaces of guide bars 102.

Carriage 200 is adjustably fixed to an inner weight tube 230 (Figure 1) which fits into an outer weight tube 231 (Figure 2) within weights 300. Inner weight tube 230 is apertured at its upper end and is pinned in socket 224a (Fig. 5) by axle 224. The inner and outer weight tubes each contain various vertically spaced apertures. By aligning a selected aperture on the inner weight tube with the top aperture on the outer weight tube, the height of carriage 200 on the exercise unit may be varied as necessary for doing different exercises. A pullpin 233 extends through the aligned apertures to secure the carriage at its selected height.

A handle 232 is attached to carriage 200 as shown particularly in Figure 12. Handle 232 preferably comprises a generally Y-shaped member having outwardly directed grips 234. A brace 235 may be provided at the throat of the "Y" to reinforce the handle.

Handle 232 is inserted into socket 232a of carriage 200 as shown in Figure 12. Preferably there are adjustment holes on the stem of the handle to allow the depth at which handle 232 is inserted into carriage 200 to be varied. A pullpin 236 secures handle 232 within socket 232a at its selected position.

In addition to varying the projection of handle 232 from carriage 200 and the height of the carriage on the exercise unit, the height of handle 232 is variable. Handle 232 may be installed in its lower position, shown in Figure 1, for doing, for example, bench press exercises, or may be inverted and installed in its upper position, shown in dotted outline in Figure 2, for doing, for example, military press exercises.

Y-shaped handle 232 is particularly suitable for exercises which require the user to be positioned between grips 234, such as squat or toe raise exercises. To provide added comfort, handle 232 may be provided with shoulder pads 238 which are adapted to rest on the user's shoulders when performing such exercises.

When performing certain exercises, such as a leg press, it is desirable to have a handle with a solid bar, i.e., one without the open neck of Y-shaped bar 232. To facilitate performing such exercises, a leg press bar 240 (Fig. 12) may be attached to grips 234 of handle 232. Leg press bar 240 is preferably a straight tubular bar closed by end caps 242. Guide tubes 244 are integrally fixed to bar 240. As shown in Figure 12, bar 240 is rotatably fixed to grips 234 by guide tubes 244 which fit over each of grips 234. In operation, bar 240 is positioned so that it is essentially centered on grips 234. For performing, for example, a leg press exercise, bar 240 is positioned below grips 234 as shown in Figure 12, and preferably to the inside of grips 234. For performing other exercises, such as close grip curls, bar 240 is rotated so that it is above grips 234.

Individual weights 300 are slid over guide bars 102 during assembly. Base plate 133 serves as a weight support platform. Weights 300 have a rectangular aperture in which guide bars 102 are received. Weights 300 also have a generally centrally located circular aperture adapted to receive weight tubes 230 and 231. Weight tubes 230 and 231 are provided with a series of vertically spaced, transverse holes 302 which are adapted to align with transverse bottom grooves 304 in each of weights 300. Selection of weight quantity is accomplished by positioning a pin or rod 306 through the groove 304 of the bottom one of a selected stack of weights and through the corresponding holes in weight tubes 230, 231. Hence, elevation of carriage 200 will raise weight tubes 230, 231, pin 306 and all weights supported thereabove.

If cable 125 is threaded through pulley wheel 204 as shown in Figures 15—17 and 19, a lifting force on the cable equal to only one-half of the weight 300 set on the exercise unit will be required because of the mechanical advantage resulting from the pulley assembly. If cable 125 is fixed to bracket 206, a lifting force equal to the full amount of weight 300 will be required.

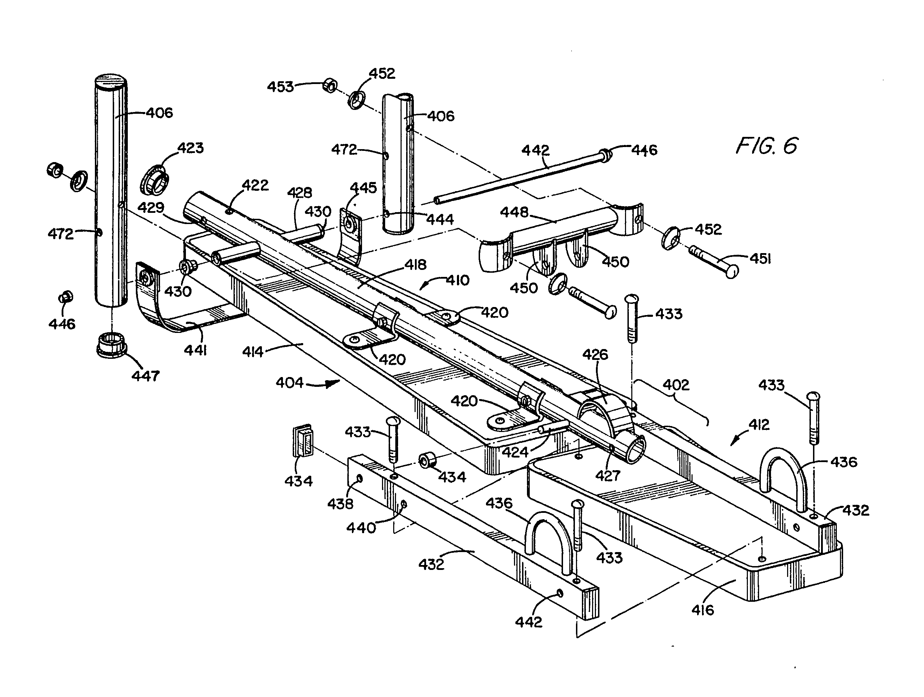

Referring to Figures 2 and 6, bench assembly 400 comprises an elongated frame, shown generally at 402, and a user support or cushion 404 fixed to frame 402. As shown particularly in Figure 2, bench assembly 400 is adjustably supported on a floor by rear legs 406 and a removable front leg assembly 408.

Referring particularly to Figure 6, elongated frame 402 includes a rear incline subframe 410 and a front or seat subframe 412. Similarly, cushion 404 is comprised of an incline cushion 414 and a seat cushion 416.

Incline subframe 410 comprises an undercarriage tube 418 which is fixed to the underside of incline cusion 414 by undercarriage brackets 420 and bolt 422. A tube plug 423 may be used to close off the open rear end of undercarriage tube 418. A pivot rod 424 extends transversely through undercarriage tube 418, near but spaced rearwardly from its front end. An incline foot 426, comprising a generally semicircular support member, is integrally fixed to undercarriage tube 418 in front of pivot rod 424. A locking hole 427 is positioned in front of incline foot 426. A pivot tube 428 extends transversely through undercarriage tube 418 near, but spaced forwardly from, its rear end. Bushings 430 are inserted into each open end of pivot tube 428. A storage hole 429 is provided at the rear end of undercarriage tube 418 for locking the bench assembly in its stored position, as explained below.

Seat subframe 412 comprises spaced seat cushion supports 432 fastened to the underside of seat cushion 416 by bolts 433 or other appropriate fastening means. Tube plugs 434 may be used to close the open ends of supports 432. A semicircular or curved floor rod 436 is integrally fixed near the front end of each of supports 432. A pivot hole 438, a locking hole 440, and a front hole 442 extend transversely through each support 432.

Seat subframe 412 is assembled to incline subframe 410 by first placing a spacer element 434 over pivot rod 424 and then placing pivot rod 424 through pivot holes 438 of supports 432. In this configuration, seat subframe 412 can be pivoted with respect to incline subframe 410, as shown in dotted outline in Figure 2.

Rear legs 406 and foot strap 441 are attached to incline subframe 410 by inserting a pivot axle 442 transversely through openings 444 in rear legs 406, through openings 445 in foot strap 440, and through pivot tube 428. A pushnut 446 is placed over each projecting end of axle 442 to thus secure the components in their assembled configuration. Appropriate tube plugs 447 may be placed in legs 406 to close their open upper ends.

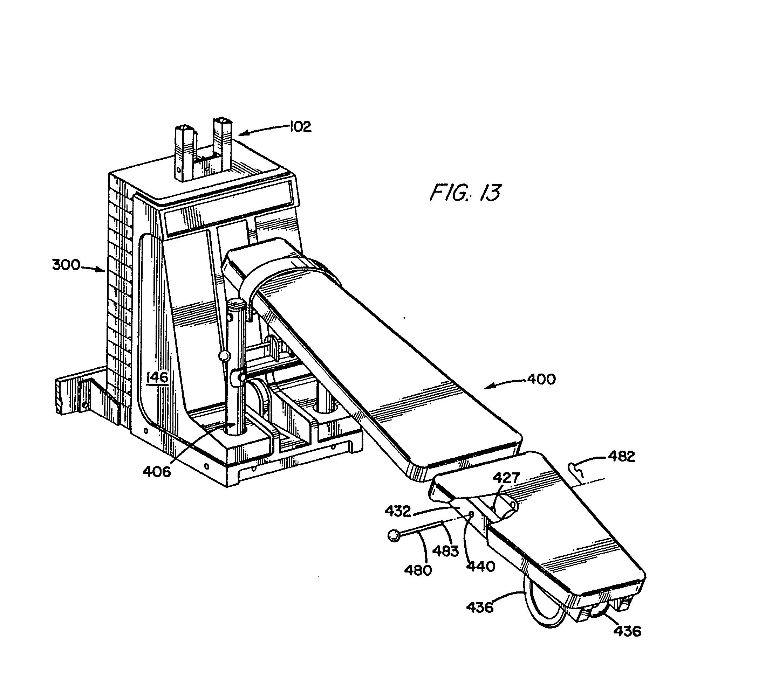

A leg brace 448 having locking tabs 450 is fixed to the front side of rear legs 406 by bolts 451, washers 452 and locknuts 453. In this configuration, incline subframe 410 is rotatable about axle 442 and thus may be pivoted with respect to rear legs 406, as shown in dotted outline in Figure 2 and in Figure 13.

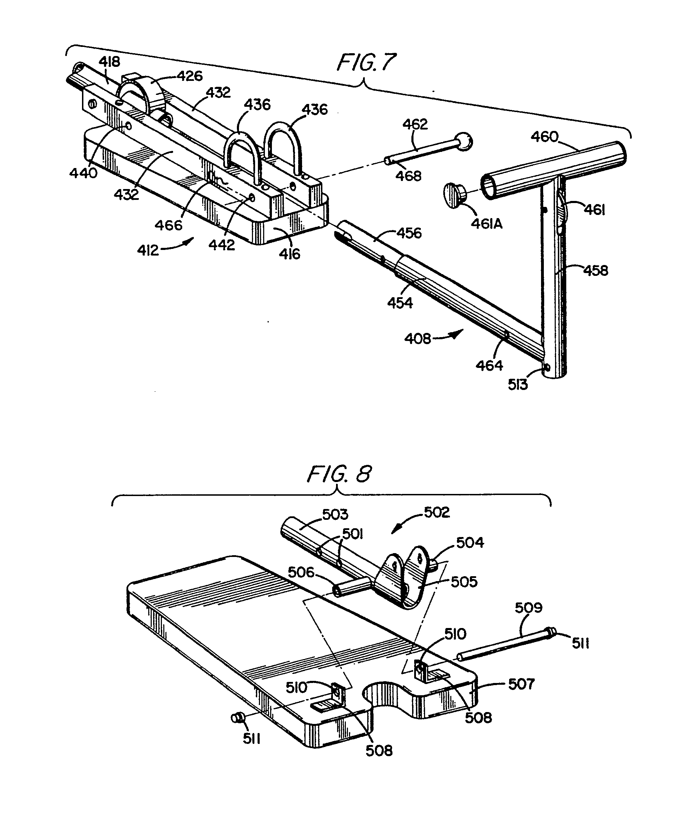

In order to support the bench assembly at a level height above the floor, a removable front leg assembly 408 may be attached to seat subframe 412, as shown particulary in Figure 7. Front leg assembly 408 comprises a first tube 454 which is inserted between seat subframe supports 432. Tube 454 includes a portion 456 of reduced diameter which is inserted into the open, front facing end of undercarriage tube 418. A second tube 458 is integrally connected to first tube 454 and is at right angles thereto. Floor tube 460 extends across second tube 458 in a T-shaped configuration. A pulley 461 is rotatably fixed in second tube 458. In operating position, floor tube 460 rests against a floor, as shown in Figures 1 and 2. The open ends of floor tube 460 may be closed by tube plugs 461A.

Front leg assembly 408 is fixed to seat subframe 412 by inserting a locking rod 462 transversely through aligned locking hole 464 of first tube 454 and front holes 442 of seat subframe supports 432. A hairpin cotter 466 is inserted through a hole 468 in the end of locking rod 462 to thus secure the front leg assembly in position. Front leg assembly may be easily removed from seat subframe 412 merely by removing hairpin cotter 466 and locking rod 462.

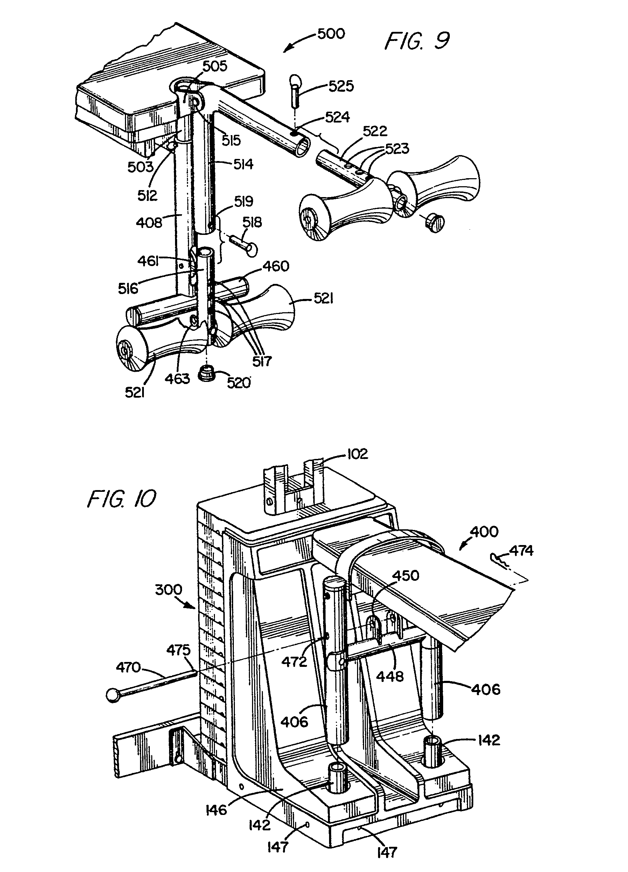

Bench assembly 400 may be connected to the exercise unit by sliding rear legs 406 over guide tubes 142, as shown particularly in Figure 10. A locking rod 470 may extend through holes 472 in rear legs 406 and through locking tabs 450 on leg brace 448. A hairpin cotter 474 inserted through hole 475 in the end of locking rod 470 keeps locking rod 470 in position.

Bench assembly 400 may be used as a slant board, as shown in Figure 13. In order to be so used, front leg assembly 408 and any auxiliary attachments, such as preacher curl assembly 550 or leg lift assembly 500, must be removed. A locking rod 480 is inserted through locking hole 440 of seat subframe supports 432 and through locking hole 427 of undercarriage tube 418. A hairpin cotter 482 extends through hole 483 in the end of locking rod 480 to secure the rod in place. In this configuration, seat subframe 412 is fixed in a mutally straight alignment with incline subframe 410 and is not able to pivot about pivot rod 424. Since front leg assembly 408 has been removed, the front of seat subframe 412 may be lowered until floor rods 436 engage the floor.

Bench assembly 400 alternatively may be positioned in an incline position, as shown in dotted outline in Figure 2 by removing the locking rod 480, thus permitting seat subframe 412 to pivot about pivot rod 424. In this configuration, floor rods 436 and incline foot 426 engage the floor to support the bench in its incline position.

A leg lift assembly 500 may be connected to front leg assembly 408, as shown particularly in Figures 8 and 9. Leg lift assembly 500 comprises a leg lift pivot unit 502, which comprises a main tube 503, a pivot tube or rod 504 extending transversely through tube 503, and a pivot bracket 505 fixed to main tube 503. Bushings 506 are inserted into each end of pivot tube 504. Main tube 503 preferably has a plurality of adjustment holes 501 for adjusting the height of pivot unit 502 in its assembled configuration as explained below.

A leg lift cushion 507 is attached to leg lift pivot unit 502, as shown particularly in Figure 8. Leg lift cushion 507 includes mounting brackets 508 on its bottom or underside. Pivot tube 504 is placed between brackets 508. A pivot rod 509 extends through openinggs 510 in brackets 508 and through pivot tube 504. Pushnuts 511 cap each end of pivot rod 509 to secure it in its assembled position.

Main tube 503 of leg lift pivot unit 502 is inserted into front leg assembly 408, as shown particularly in Figure 9. A pullpin 512 is inserted through one of holes 501 in main tube 503 and a corresponding hole 513 (Figure 7) in front leg assembly 408 to secure tube 503 in its assembled position.

An L-shaped leg lift tube 514 is attached to leg lift pivot unit 502 by pivot pin 515 inserted through leg lift tube 514 and connecting leg lift tube 514 to pivot bracket 505, as shown particularly in Figure 9.

As shown, when thus assembled, one leg of tube 514 projects downwardly, with the other leg projecting perpendicular thereto in a forward direction. A foot extension tube 516 may be connected to the downwardly projecting tube of leg lift tube 514. Foot extension tube includes various adjusting holes 517 which enable it to be adjustably positioned in leg lift tube 514 using a pullpin 518 inserted through a hole 519 in leg lift tube 514 and one of the adjusting holes 517 in foot extension tube 516. A tube plug 520 may be used to close the open end of foot extension tube 516. Foot extension tube 516 includes foot pads 521 which are to be engaged by the user's ankle area when performing a leg lift exercise. Foot pads 521 are spool-shaped with a reduced diameter center portion.

A leg curl extension tube 522, generally similar to foot extension tube 516, may be inserted into the forwardly projecting leg of leg lift tube 514, as shown generally in Figure 9. Leg curl tube 522 includes adjusting holes 523 which enable leg curl tube 522 to be adjustably positioned within leg lift tube 514. One of adjusting holes 523 is aligned with an aperture 524 in leg lift tube 514 and secured in position by a pullpin 525 inserted through the aligned apertures.

Leg lift assembly 500 is used with cable 125. One end of cable 125 is pinned to bracket 114 by bolt 129 fixed through hole 131, as shown in Figure 4. Cable 125 is then threaded under pulley wheel 204, over a pulley wheel in pulley assembly 118, under lower pulley bracket assembly 136, under pulley wheel 461, and fixed to an eyelet 463 in foot extension tube 516, as shown in Figure 15. In this configuration, a lifting force equal to one-half of the weight 300 set on the unit will be exerted by the user.

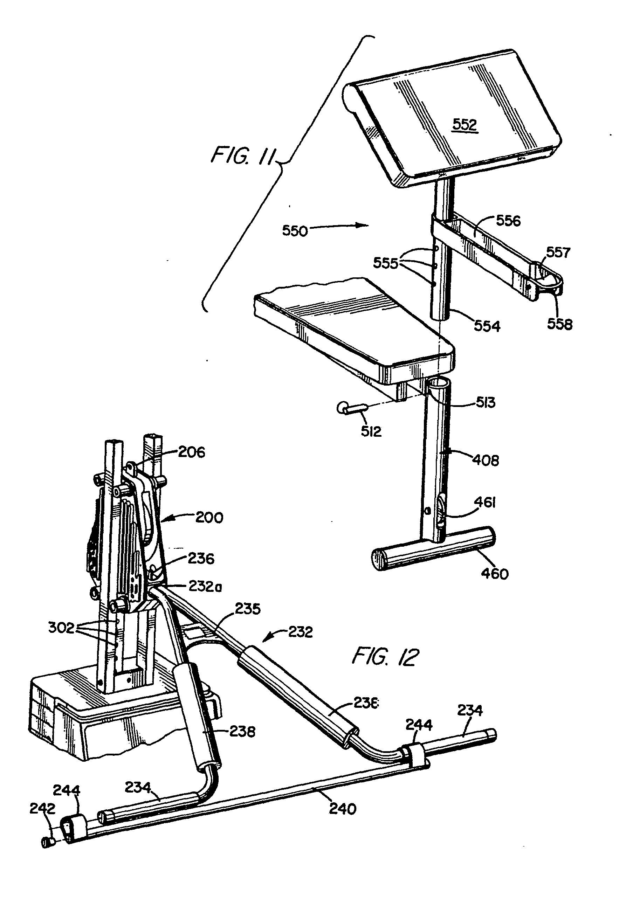

Alternatively, rather than securing leg lift assembly 500 in front leg assembly 408 as described above, a "preacher curl" assembly 550, primarily for doing arm curl exercises, may be connected to front leg assembly 408, as shown generally in Figure 11. Preacher curl assembly 550 includes a preacher curl cushion 552 which is connected to a preacher curl support tube 554. Support tube 554 includes a plurality of adjusting holes 555, which may be selectively aligned with aperture 513 of front leg 408 to fasten preacher curl assembly 550 at a desired height in front leg assembly 408. Pullpin 512 secures preacher curl assembly 550 in its selected position. A preacher curl cable arm 556 is connected to support 554 and extends perpendicular thereto in a forward direction, as shown in Figure 11. Preacher curl cable arm 556 includes a roller 557 and a cable guide or retainer 558. Preacher curl cable arm 556 guides and facilitates movement of a cable attached to weights 300 when doing a preacher curl exercise.

Preacher curl assembly 550 is used with a preacher curl cable threaded through the pulley wheels of the unit in a manner similar to the configuration previously described with respect to leg lift unit 500. However, when using preacher curl assembly 550, the cable may not be threaded through pulley wheel 204, but rather may be connected directly to bracket 206, in which configuration a lifting force equal to the full amount of weight 300 is applied. Alternatively, the preacher curl assembly may be configured as shown in Figure 16, using pulley wheel 206, in which configuration a lifting force equal to one-half of weight 300 is applied.

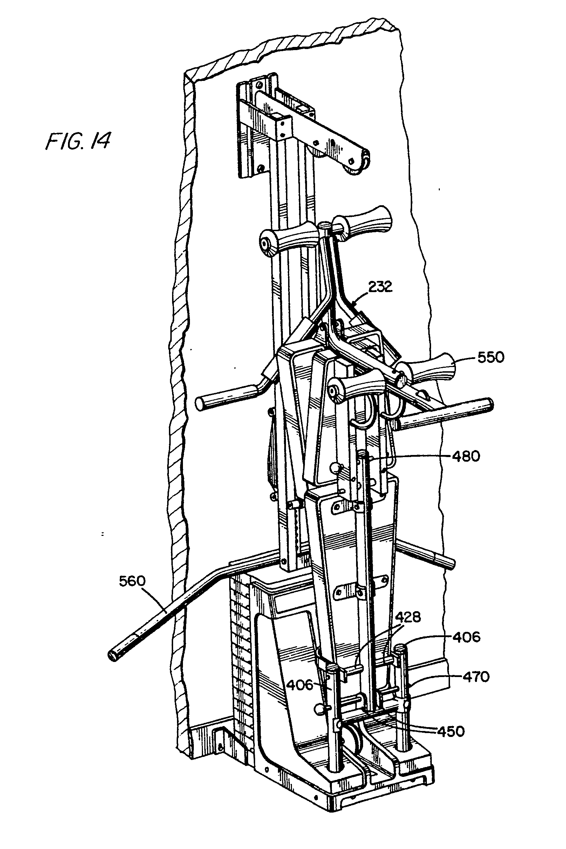

The exercise unit may be conveniently placed in a storage position, as shown in Figure 14. In order to place the exercise unit in its storage position, any accessories such as leg lift assembly 500 or preacher curl assembly 550, as well as handle 232 and front leg assembly 408 should be removed from the assembly to provide a more compact storage position. However, as shown in Figure 14, leg lift assembly 500 has been left in position, and handle 232 has been hung in a convenient location. A lat bar 560 also has been hung in a convenient location. In the storage position seat subframe 412 is placed in its locked, mutually straight position with respect to incline subframe 410 by inserting locking rod 480 through locking holes 440 and 427. Locking rod 470 (Figure 10) is removed and bench assembly 400 is pivoted about pivot tube 428 until bench assembly 400 extends essentially in a vertical direction. In this position, storage hole 429 (Figure 6) is aligned with apertures in locking tabs 450. Locking rod 470 is then reinserted through holes 472 in rear legs 406, through storage hole 429, and through apertures in locking tabs 450 to thus lock bench assembly 400 in its folded, storage position.

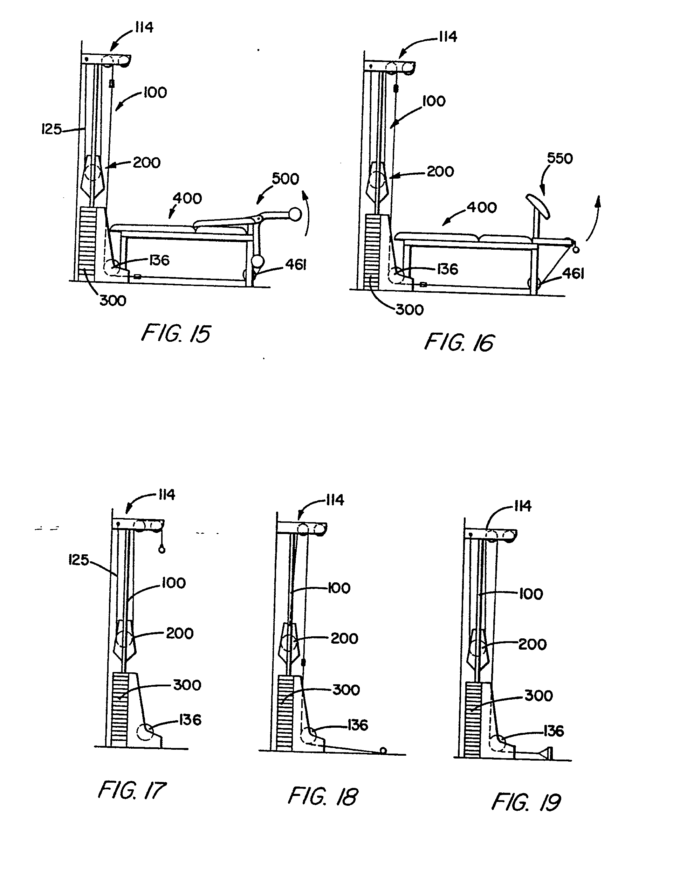

Various types of exercises may be performed with the cable and pulley system and accessories of the present invention by selectively threading cables 125 through the aforementioned pulleys and cable guides. For example, Figure 17 illustrates the carriage cable assembly for performing various "high pull" weight lifting exercises. Any suitable handle or grip may be secured to the cable to facilitate performing these exercises. Figures 18 and 19 illustrate alternative cable arrangements for performing various "low pull" exercises. In Figure 19, a suitable handle or grip is shown attached to the end of the cable. In Figure 18, a lifting force equal to the full amount of weight 300 is applied; in Figure 19, a lifting force equal to one-half of weight 300 is applied.

It will be appreciated that the exercise unit of the invention successfully accomplishes its objectives by virtue of its simplicity, versatility, and compactness when folded for storage. It is capable of many varied uses for exercising substantially all portions of the body.

## Claims

1. An adjustable floor-supported exercise bench (400) having an elongated bench frame (402) supporting a seat (404) and pivotally connected at its rear end to the rear support means (406) for movement relative thereto between a first substantially horizontal position in which its front end is supported above the floor by front support means comprising a front leg assembly (408) and a second inclined position in which its front end rests on the floor, said bench (402) comprising front and rear longitudinally aligned subframes (412, 410) pivotally connected together at their adjacent ends for relative movement between a first position in which they are co-planar and a second position in which the rear subframe (410) is inclined upwardly at an obtuse angle with respect to the front subframe (412), characterised in that in said second position the front subframe and the front end of the rear subframe are adjacent to the floor; the front leg assembly (408) is coupled to a single, tubular, longitudinal undercarriage member (418) on the rear subframe (410) when the bench frame (402) is in its first position, to support the front subframe (412) above the floor, and removed from the undercarriage member in the second position of the bench frame to permit the front subframe to rest on the floor; and removable locking means (408) is provided for preventing relative pivotal movement of the front and rear subframes in the first co-planar position of said subframes.

2. An exercise bench according to claim 1, wherein the seat (404) comprises front and rear seat cushions (416, 414) attached to the front and rear subframes (412, 410) respectively.

3. An exercise bench according to claim 1 or 2, wherein the front subframe (412) comprises a pair of spaced longitudinal support members (432), and floor engaging members (436) fixed adjacent to the front end of each of said support members for supporting the front subframe when the bench frame (402) is in its second inclined position.

4. An exercise bench according to any one of claims 1 to 3, wherein said rear support means (406) is attached to a user-engageable force resistor unit.

5. An exercise bench according to claim 4, wherein said user-engageable force resistor unit comprises a liftable, guided weight assembly (200, 300), pulley means (118, 136, 204) a user-engageable cable (125) operatively coupled to said weight assembly and said pulley means, and effort level selection means (127, 204, 206) for selectively varying the mechanical advantages of said cable and pulley means so as to require a lifting force equal to either the full amount of the selected weight or a portion of the selected weight.

6. An exercise bench according to claim 5, wherein said weight assembly (200, 300) includes a guided carriage (200) and at least one weight (300) attached thereto, said pulley means (118, 136, 204) comprises a carriage pulley (204) movable with said carriage and an upper pulley (118) at a fixed location above said carriage and said effort level selection means (127, 204, 206) comprises cable coupling and anchoring means (127, 206) for coupling one end of said cable (125) directly to said carriage with said cable trained over said upper pulley for requiring a lifting force equal to the selection weight and for anchoring said one end of said cable at an elevated location with said cable trained around said carriage pulley and said upper pulley for halving the required lifting force.

7. An exercise bench according to any preceding claim, provided with a leg exercise assembly (500) comprising a pivot unit (502) removably supported on said front support means (408), a leg exercise cushion (507) fixed to said pivot unit and overlying said front subframe (412), and a user-engageable leg exercise member (514) pivotably attached to said pivot unit for pivotable movement longitudinally of said bench.

8. An exercise bench according to claim 7, wherein said leg exercise assembly (500) comprises adjustment means (501) for adjusting the height thereof relative to said front subframe (412).

9. An exercise bench as recited in claim 7 or 8, wherein said user-engageable leg exercise member (514) includes a leg lift arm which pivotally depends from said pivot unit (502) and has ankle engaging means (521) at the distal end thereof.

10. An exercise bench according to any one of claims 7 to 9, wherein said user-engageable leg exercise member (514) includes a leg curl arm which pivotally extends forwardly from said pivot unit (502) and has ankle engaging means at the distal end thereof.

11. An exercise bench according to claim 7 or 8, wherein said user-engageable leg exercise member (514) comprises a generally L-shaped member which is pivotally attached to said pivot unit (502) and has a depending leg lift arm, a forwardly extending leg curl arm, and ankle engaging means (521) at the distal ends of each of said arms.

12. An exercise bench according to any preceding claim, further including an arm curl exercise assembly (550) removably supported adjacent the front end of said front subframe (412) and comprising a support member (554) removably supported on said front support means (408), a forwardly facing and inclined arm curl cushion (552) fixed to said support member and cable guide means including a forwardly projecting guide arm (556) fixed to said support member, and a cable guide adjacent the forward end of said guide arm for guiding a user-engageable tensioned cable (125).

13. An exercise bench according to claim 12, wherein said arm curl exercise assembly (550) includes adjustment means (555) for adjusting the height thereof relative to said front subframe (412).

14. An exercise bench according to claim 12 or 13, wherein said cable guide comprises a roller (557) rotatably supported by said guide arm (556), and a cable retainer (558) fixed to said guide arm and extending forwardly of said roller to define therewith a captive guideway for said cable (125).

**Patentansprüche**

1. Verstellbare, auf dem Boden aufliegende Gymnastikbank (400), die einen länglichen Bankrahmen (402) hat, der einen Sitz (404) trägt und schwenkbeweglich an seinem hinteren Ende mit der hinteren Stützeinrichtung (406) zur relativen Bewegung bezüglich derselben zwischen einer ersten im wesentlichen horizontalen Position, in der das vordere Ende über dem Boden durch die vordere Stützeinrichtung gehalten ist, die eine vordere Beinanordnung (408) aufweist, und einer zweiten, geneigten Position, in der das vordere Ende auf dem Boden aufliegt, verbunden ist, wobei die Bank (402) vordere und hintere, in Längsrichtung verlaufende Unterrahmen (412, 410) aufweist, die an ihren anstoßenden Enden schwenkbeweglich miteinander zur Ausführung einer Relativbewegung zwischen einer ersten Position, in der diese koplanar sind, und einer zweiten Position, in der der hintere Unterrahmen (410) unter einem stumpfen Winkel zu dem vorderen Unterrahmen (412) nach oben geneigt ist, verbunden sind, dadurch gekennzeichnet, daß in der zweiten Position der vordere Unterrahmen und das vordere Ende des hinteren Unterrahmens in der Nähe des Bodens sind, die vordere Fußanordnung (408) mit einem einzigen, rohrförmigen, in Längsrichtung verlaufenden Fahrgestellteil (418) an dem hinteren Unterrahmen (410) verbunden ist, wenn der Bankrahmen (402) in der ersten Position ist, um den vorderen Unterrahmen (412) über dem Boden abzustützen, und der von dem Fahrgestellteil in der zweiten Position des Bankrahmens abgenommen ist, um zu ermöglichen, daß der vordere Unterrahmen auf dem Boden aufliegt, und daß abnehmbare Verriegelungseinrichtungen (408) vorgesehen sind, um eine relative Schwenkbewegung der vorderen und hinteren Unterrahmen in der ersten koplanaren Position der Unterrahmen zu verhindern.

2. Gymnastikbank nach Anspruch 1, bei der der Sitz (404) vordere und hintere Sitzpolster (416, 414) aufweist, die an den vorderen und hinteren Unterrahmen (412, 410) jeweils angebracht sind.

3. Gymnastikbank nach Anspruch 1 oder 2, bei der der Unterrahmen (412) ein Paar von im Abstand angeordneten, länglichen Stützteilen (432) und mit dem Boden zusammenarbeitende Teile (436) aufweist, die in der Nähe des vorderen Endes der jeweiligen Stützteile befestigt sind, um den vorderen Unterrahmen zu tragen, wenn der Bankrahmen (402) in der zweiten, geneigten Position ist.

4. Gymnastikbank nach einem der Ansprüche 1 bis 3, bei der die hintere Stützeinrichtung (406) an einer mit einem Benutzer zusammenarbeitenden Kraftwiderstandseinheit angebracht ist.

5. Gymnastikbank nach Anspruch 4, bei der die mit dem Benutzer zusammenarbeitende Kraftwiderstandseinheit eine hebbare, geführte Gewichtsanordnung (200, 300), eine Seilscheibeneinrichtung (118, 136, 204), ein mit dem Benutzer zusammenarbeitendes Seil (125), das betriebsmäßig mit der Gewichtsanordnung und der Seilscheibeneinrichtung verbunden ist, und eine Kraftaufwandswähleinrichtung (127, 204, 206) aufweist, mittels welcher sich der mechanische Kraftaufwand über das Seil und die Seilscheibeneinrichtung selektiv derart variieren läßt, daß eine Hubkraft erforderlich ist, die entweder gleich dem gesamten gewählten Gewicht oder einem Teil des gewählten Gewichts ist.

6. Gymnastikbank nach Anspruch 5, bei der die Gewichtsanordnung (200, 300) einen geführten Schlitten (200) und wenigstens ein Gewicht (300), das an diesem angebracht ist, umfaßt, die Seilscheibeneinrichtung (118, 136, 204) eine Schlittenseilscheibe (204) aufweist, die mit dem Schlitten bewegbar ist, und eine obere Seilscheibe (118) an einer festen Stelle oberhalb des Schlittens aufweist, und bei der die Kraftaufwandsgrößenwähleinrichtung (127, 204, 206) eine Seilverbindungs- und Verankerungseinrichtung (127, 206) zum Verbinden eines Endes des Seils (125) direkt mit dem Schlitten aufweist, wobei das Seil über die obere Seilscheiße läuft, so daß eine Hubkraft aufgebracht werden muß, die gleich dem gewählten Geiwcht ist, und wobei diese Einrichtung ein Ende des Seils an einer höherliegenden Stelle mit dem um die Schlittenseilscheibe laufenden Seil und der oberen Seilscheibe verankert, um die erforderliche Hubkraft zu halbieren.

7. Gymnastikbank nach einem der vorangehenden Ansprüche, die mit einer Fußgymnastikanordnung (500) versehen ist, die eine Schwenkeinheit (502) aufweist, die lösbar an der vorderen Stützeinrichtung (408) gelagert ist, ferner ein Beingymnastikpolster (507) aufweist, das fest mit der Schwenkeinheit verbunden ist und über dem vorderen Unterrahmen (412) liegt, und ein mit dem Benutzer zusammenarbeitendes Beingymnastikteil (514) aufweist, das schwenkbeweglich an der Schwenkeinheit zur Ausführung einer Schwenkbewegung in Längsrichtung der Bank angebracht ist.

8. Gymnastikbank nach Anspruch 7, bei der die Beingymnastikanordnung (500) eine Einstelleinrichtung (501) zur Einstellung der Höhe derselben relativ zu dem vorderen Unterrahmen (412) aufweist.

9. Gymnastikbank nach Anspruch 7 oder 8, bei der das mit dem Benutzer zusammenarbeitende Beingymnastikteil (514) einen Beinhubarm umfaßt, der schwenkbeweglich hängend an der Schwenkeinheit (502) vorgesehen ist, und der eine mit dem Fußnöchel zusammenarbeitende Einrichtung (521) an seinem distalen Ende hat.

10. Gymnastikbank nach einem der Ansprüche 7 bis 9, bei der das mit dem Benutzer zusammenarbeitende Beingymnastikteil (514) einen Beinumschlingungsarm umfaßt, der schwenkbeweglich von der Schwenkeinheit (502) nach vorne sich erstreckt, und der eine mit dem Fußnöchel zusammenarbeitende Einrichtung an seinem distalen Ende aufweist.

11. Gymnastikbank nach Anspruch 7 oder 8, bei der das mit dem Benutzer zusammenarbeitende Beingymnastikteil (514) ein im allgemeinen L-förmiges Teil aufweist, das schwenkbeweglich an der Schwenkeinheit (502) angebracht ist und einen hieran hängend angebrachten Beinhubarm, einen nach vorne verlaufenden Beinumschlingungsarm und eine mit dem Fußnöchel zusammenarbeitende Einrichtung (521) an den distalen Enden der jeweiligen Arme hat.

12. Gymnastikbank nach einem der vorangehenden Ansprüche, die ferner eine Armumschlingsgymnastikanordnung (550) umfaßt, die lösbar in der Nähe des vorderen Endes des vorderen Unterrahmens (412) gelagert ist, und ein Stützteil (554), das lösbar an der vorderen Stützeinrichtung (408) gelagert ist, ein nach vorne weisendes und geneigtes Armumschlingungspolster (552), das an dem Stützteil befestigt ist, und eine Seilführungseinrichtung aufweist, die einen nach vorne vorspringenden Führungsarm (556), der an dem Stützteil befestigt ist, und eine Seilführung in der Nähe des vorderen Endes des Führungsarmes zum Führen eines mit einem Benutzer zusammenarbeitenden Zugseils (125) umfaßt.

13. Gymnastikbank nach Anspruch 12, bei der die Armumschlingungsgymnastikanordnung (550) eine Einstelleinrichtung (555) zum Einstellen der Höhe derselben relativ zu dem vorderen Unterrahmen (412) umfaßt.

14. Gymnastikbank nach Anspruch 12 oder 13, bei der die Seilführung eine Rolle (557), die mittels des Führungsarmes (556) drehbar gelagert ist, und einen Seilhalter (558) aufweist, der an dem Führungsarm befestigt ist und sich von der Rolle nach vorne erstreckt, um zusammen mit dieser eine Fesselführung für das Seil (125) zu bilden.

## Revendications

1. Un banc d'entraînement réglable (400) prenant appui sur le sol, comprenant un châssis de banc allongé (402) qui soutient un siège (404) et qui est articulé à son extrémité arrière au moyen de support arrière (406) pour se déplacer par rapport à celui-ci entre une première position pratiquement horizontale dans laquelle son extrémité avant est en appui au dessus du sol par un moyen de support avant comprenant un ensemble de jambe avant (408) et une seconde position inclinée dans laquelle son extrémité avant repose sur le sol, ledit banc (402) comportant des sous-châssis avant et arrière alignés longitudinalement (412, 410) articulés ensemble à leurs extrémités adjacentes pour effectuer un mouvement relatif entre une première position dans laquelle ils sont coplanaires et une seconde position dans laquelle le sous-châssis arrière (410) est incliné vers le haut en faisant un angle obtus avec le sous-châssis avant (412), caractérisé en ce que dans ladite seconde position le sous-châssis avant et l'extrémité avant du sous-châssis arrière sont adjacents au sol; l'ensemble de jambe avant (408) est couplé à un élément de support inférieur longitudinal tubulaire unique (418) du sous-châssis arrière (410) lorsque le châssis de banc (402) est dans sa première position, pour soutenir le sous-châssis avant (412) au-dessus du sol et est écarté de l'élément de support inférieur dans la seconde position du châssis de banc pour permettre au sous-châssis avant de reposer sur le sol, et un moyen de verrouillage amovible (408) est prévu pour empêcher un mouvement relatif de pivotement des sous-châssis avant et arrière dans la première position coplanaire desdits sous-châssis.

2. Un banc d'entraînement selon la revendication 1, dans lequel le siège (404) comprend des coussins d'assise avant et arrière (416, 414) qui sont liés aux sous-châssis avant et arrière (412, 410) respectivement.

3. Un banc d'entraînement selon la revendication 1 ou 2, dans lequel le sous-châssis avant (412) comporte une paire d'éléments de support longitudinaux écartés (432) et des éléments engageant le sol (436) fixés au voisinage de l'extrémité avant de chacun desdits éléments de support pour soutenir le sous-châssis avant lorsque le châssis de banc (402) est dans sa seconde position inclinée.

4. Un banc d'entraînement selon l'une quelconque des revendications 1 à 3, dans lequel ledit moyen de support arrière (406) est lié à un ensemble résistant à la force pouvant être actionné par l'utilisateur.

5. Un banc d'entraînement selon la revendication 4, dans lequel ledit ensemble résistant à la force pouvant être actionné par l'utilisateur comprend un ensemble de poids (200, 300) guidé et destiné à être soulevé, des moyens à poulies (118, 136, 204), un câble destiné à être actionné par l'utilisateur qui est opérationnellement couplé audit ensemble de poids et auxdits moyens à poulies, et un moyen de sélection du niveau d'effort (127, 204, 206) pour faire varier sélectivement les avantages mécaniques desdits moyens à câble et à poulies de façon à demander une force d'élévation égale soit au montant total du poids sélectionné soit à une partie du poids sélectionné.

6. Un banc d'entraînement selon la revendication 5, dans lequel ledit ensemble de poids (200, 300) comprend un chariot guidé (200) et au moins un poids (300) qui lui est lié, lesdits moyens à poulies (118, 136, 204) comprennent une poulie de chariot (204) mobile avec ledit chariot et une poulie supérieure (118) fixée au dessus dudit chariot, et ledit moyen de sélection du niveau d'effort (127, 204, 206) comprend un moyen de couplage et d'ancrage du câble (127, 206) afin d'associer une extrémité dudit câble (125) directement audit chariot avec ledit câble qui passe sur ladite poulie supérieure pour demander une force d'élévation égale au poids sélectionné et afin d'amener ladite extrémité dudit câble en un endroit élevé avec ledit câble qui passe autour de la dite poulie de chariot et de ladite poulie supérieure pour réduire de moitié la force d'élévation demandée.

7. Un banc d'entraînement selon l'une quelconque des revendications précédentes, qui comporte un ensemble d'entraînement pour les jambes (500) comprenant un ensemble à pivot (502) porté de façon amovible par ledit moyen de support avant (408), un coussin pour l'entraînement des jambes (507) fixé audit ensemble à pivot et s'étendant au-dessus dudit sous-châssis avant (412) et un élément d'entraînement de jambes articulé audit ensemble à pivot pour se déplacer selon un mouvement de pivotement orienté longitudinalement par rapport audit banc.

8. Un banc d'entraînement selon la revendication 7 dans lequel ledit ensemble d'entraînement des jambes (500) comprend un moyen de réglage (501) pour régler sa hauteur par rapport au sous-châssis avant (412).

9. Un banc d'entraînement selon la revendication 7 ou 8, dans lequel ledit élément d'entraînement des jambes pouvant être actionné par l'utilisateur (514) inclut un bras de soulèvement des jambes qui dépend pour son pivotement dudit ensemble à pivot (502) et comprend un moyen de prise des chevilles (521) à son extrémité distale.

10. Un banc d'entraînement selon l'une quelconque des revendications 7 à 9, dans lequel ledit élément d'entraînement des jambes pouvant être actionné par l'utilisateur (514) inclut un bras à boucle pour jambe qui, en pivotant, s'étend vers l'avant à partir dudit ensemble à pivot (502) et présente un moyen d'engagement des chevilles à son extrémité distale.

11. Un banc d'entraînement selon la revendication 7 ou 8, dans lequel ledit élément d'entraînement des jambes pouvant être actionné par l'utilisateur comprend un élément de forme générale en L lié en pivotement audit ensemble à pivot (502) et présente un bras de soulèvement des jambes qui en dépend, un bras à boucle pour jambe qui s'étend vers l'avant et un moyen de prise de la cheville (521) aux extrémités distales de chacun desdits bras.

12. Un banc d'entraînement selon l'une quelconque des revendications précédentes, comprenant de plus un ensemble d'entraînement à boucles pour bras (550) porté de façon amovible au voisinage de l'extrémité avant dudit sous-châssis avant (412) et comportant un élément de support (554) porté de façon amovible par ledit moyen de support avant (408), un coussin à boucle pour bras (552) faisant face vers l'avant et incliné, qui est fixé audit élément de support, et un moyen de guidage du câble comprenant un bras de guidage (556) faisant saillie vers l'avant qui est fixé audit élément de support, et un guide de câble disposé au voisinage de l'extrémité avant dudit bras de guidage pour guider un câble tendu (125) pouvant être actionné par l'utilisateur.

13. Un banc d'entraînement selon la revendication 12, dans lequel ledit ensemble d'entraînement à boucles pour bras (550) comprend un moyen d'adjustement (555) pour régler sa hauteur par rapport audit sous-châssis avant (412).

14. Un banc d'entraînement selon la revendication 12 ou 13, dans lequel ledit guide de câble comprend un rouleau (557) porté pour tourner par ledit bras de guidage (556) et un dispositif de retenue de câble (558) fixé audit bras de guidage et s'étendant vers l'avant dudit rouleau pour définir avec lui un chemin de guidage fermé pour ledit câble (125).

FIG. 1

FIG. 2

FIG. 3

FIG. 4

FIG. 5

EP 0 167 367 B1

FIG. 6

*FIG. 7*

*FIG. 8*

FIG. 9

FIG. 10

FIG. 11

552

550

556

557

555

554

558

513

512

408

461

460

206

200

236

232a

302

235

232

FIG. 12

238

236

238

234

234

244

244

240

242

FIG. 13

FIG. 14

232

550

480

560

428

406

406

470

450

FIG. 15

FIG. 16

FIG. 17

FIG. 18

FIG. 19